(19) Europäisches Patentamt / European Patent Office / Office européen des brevets

(11) **EP 2 641 952 A1**

(12) **EUROPEAN PATENT APPLICATION**

(43) Date of publication:
**25.09.2013 Bulletin 2013/39**

(51) Int Cl.:
*C09J 123/02* *(2006.01)*    *C09J 123/22* *(2006.01)*

(21) Application number: **13159925.0**

(22) Date of filing: **19.03.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.03.2012 JP 2012062204**

(71) Applicants:
• **NITTO DENKO CORPORATION**
**Ibaraki-shi, Osaka 567-8680 (JP)**
• **Kansai Paint Co., Ltd**
**Amagasaki-shi,**
**Hyogo 661-8555 (JP)**

(72) Inventors:
• **Igarashi, Takeshi**
**Ibaraki-shi, Osaka 567-8680 (JP)**
• **Suzuki, Toshitaka**
**Ibaraki-shi, Osaka 567-8680 (JP)**
• **Hirano, Yoshikuni**
**Hiratsuka-shi, Kanagawa 254-8562 (JP)**

(74) Representative: **Grünecker, Kinkeldey,
Stockmair & Schwanhäusser**
**Leopoldstrasse 4**
**80802 München (DE)**

(54) **Paint protection sheet**

(57)    The present invention provides paint protection sheet 10 comprising support substrate 1 and pressure-sensitive adhesive layer 2 provided on support substrate 1. The pressure-sensitive adhesive constituting pressure-sensitive adhesive layer 2 comprises a polyisobutylene as its base polymer and a styrene/isobutylene block copolymer. The styrene/isobutylene block copolymer is contained in an amount larger than zero part by mass, but smaller than or equal to 70 parts by mass relative to 100 parts by mass of the polyisobutylene.

[Fig. 1]

EP 2 641 952 A1

**Description**

CROSS-REFERENCE

The present application claims priority based on Japanese Patent Application No. 2012-062204 filed on March 19th, 2012, and the entire contents thereof are incorporated herein by reference.

BACKGROUND OF THE INVENTION

1. Field of the Invention

The present invention relates to a paint protection sheet for protecting a paint film from damages such as scratches, dirt deposits, and so on.

2. Description of the Related Art

When transporting, storing, curing or constructing an article with a painted surface (e.g., painted automobiles and automotive components, painted metal plates such as steel plates, etc., as well as articles formed thereof), as a known means of protection for preventing failures on the painted surface, a protection sheet is adhered to the paint film. A paint protection sheet used for such a purpose is generally constructed to comprise a pressure-sensitive adhesive (PSA) layer on one face of a resin substrate sheet (support substrate) so that it can serve the protective purpose when adhered via the PSA layer to the surface of an adherend (a paint film to be protected).
For constituting a PSA layer in a paint protection sheet, use of a polyisobutylene-based PSA is known (Japanese Patent No. 2832565). In dynamic viscoelastic measurements, a polyisobutylene-based PSA shows a wide rubbery plateau region in the storage modulus when measured as the temperature is varied, and also exhibits poor elasticity. Thus, according to a polyisobutylene-based PSA, can be obtained a PSA sheet suitable for surface protection such that the adhesive behavior is less temperature-dependent (in other words, it exhibits stable adhesive properties over a wide temperature range) and residue marks of the PSA sheet are less likely to be left on the surface of an adherend when the sheet is removed. In addition, a polyisobutylene-based PSA typically comprises no crosslinks and is less likely to build up an internal strain in the PSA itself. Thus, as a preferable characteristic, it is less likely that the surface of an adherend is exposed to stress due to the strain. This is especially important in an application, such as a protection sheet for paint films of vehicles (typically automobiles), where clean removal of the protection sheet is highly expected so as not to leave residue marks on the adherend surface. On the other hand, technical literatures relating to a protection sheet using a block copolymer-based PSA include Japanese Patent Application Publication No. 2007-238746 and Japanese Patent No. 3887402. Japanese Patent No. 3471122 relates to a PSA formulation for medical use.

SUMMARY OF THE INVENTION

When a paint protection sheet is adhered to the surface of an adherend (especially, an adherend having a complex surface structure such as surfaces of vehicles including automobiles, etc.), it is preferable to carry out the adhering operations while extending (stretching) the protection sheet to some extent so that the protection sheet is adhered to the adherend surface without wrinkling or loosening. However, due to the poor elasticity, polyisobutylene-based PSA is easily deformed by sheer stress, and because it is not crosslinked, it tends to exhibit a low cohesive strength. Thus, when a paint protection sheet comprising a polyisobutylene-based PSA layer is stretched out for adhesion to an adherend surface, the force of the stretched protection sheet trying to restore its original state (the force acting to shift into a direction parallel to the adherend surface) is likely to cause part of the protection sheet to peel off from and float above the adherend surface.
The present invention was made in view of such circumstances, and an objective thereof is to provide a paint protection sheet with suppressed floating (with an increased floating resistance).
The present invention provides a paint protection sheet comprising a support substrate and a PSA layer provided thereon. The PSA constituting the PSA layer comprises a polyisobutylene as a base polymer. The PSA further comprises a styrene/isobutylene block copolymer. Herein, the styrene/isobutylene block copolymer refers to a block copolymer comprising at least one styrene block (or referred to as "St block" hereinafter) and at least one isobutylene block (or referred to as "IB block" hereinafter). The styrene/isobutylene block copolymer (or referred to as "St/IB block copolymer" hereinafter) content in the PSA can be more than zero part by mass, but less than 70 parts by mass relative to 100 parts by mass of the polyisobutylene.
According to a paint protection sheet having such a constitution, because a suitable amount of a St/IB block copolymer is added to the PSA, the floating resistance upon stretched application of the protection sheet can be increased.

In addition, since the PSA uses a polyisobutylene as its base polymer, it is able to bring out the characteristics of polyisobutylene such as low temperature-dependence of the adhesion behaviors, low likelihood to leave residue marks (traces corresponding to the shape of the protection sheet that had been adhered) to the adherend surface when the sheet is removed, and so on.

As the St/IB block copolymer, can be preferably used a material primarily comprising a triblock copolymer having a St block-IB block-St block structure. A St/IB block copolymer primarily comprising the triblock copolymer and further comprising a diblock copolymer having a St-IB structure as a secondary component can also be used.

The PSA in the paint protection sheet disclosed herein preferably satisfies the next inequality: A/B < 1.3 where A is the room temperature storage modulus measured at a frequency of 10 Hz and a temperature of 23 °C, and B is the high temperature storage modulus measured at a frequency of 10 Hz and a temperature of 70 °C. A paint protection sheet comprising such a PSA layer may stably produce desirable adhesive properties in a broad temperature range because the temperature-dependence of the storage modulus is low In a preferable embodiment, the room temperature storage modulus, A, is $4.5 \times 10^5$ Pa or lower. A protection sheet in such an embodiment may even better prevent itself from leaving residue marks on an adherend surface.

In a preferable embodiment of the art disclosed herein, the polyisobutylene as the base polymer has a weight average molecular weight (Mw) in a range from $30 \times 10^4$ to $150 \times 10^4$. Such an embodiment allows the polyisobutylene used as the base polymer to more readily produce advantageous effects (low temperature-dependence ofthe adhesion behaviors, low likelihood to leave residue marks on an adherend surface, and so on).

In another preferable embodiment of the art disclosed herein, the St/IB block copolymer has a weight average molecular weight in a range from $3 \times 10^4$ to $20 \times 10^4$. According to such an embodiment, the floating resistance of the protection sheet can be effectively increased, and the decreases in the other properties due to the addition of the St/IB block copolymer can be better suppressed.

BRIEF DESCRIPTION OF THE DRAWINGS

Fig. 1 shows a cross-sectional view schematically illustrating an embodiment of the paint protection sheet according to the present invention.

Figs. 2(a), 2(b), 2(c) and 2(d) show diagrams schematically illustrating the method of the floating resistance test.

DETAILED DESCRIPTION OF THE INVENTION

Preferred embodiments of the present invention are described below. Matters necessary to practice this invention other than those specifically referred to in this description may be understood as design matters based on the conventional art in the pertinent field for a person of ordinary skill in the art. The present invention can be practiced based on the contents disclosed in this description and common technical knowledge in the subject field.

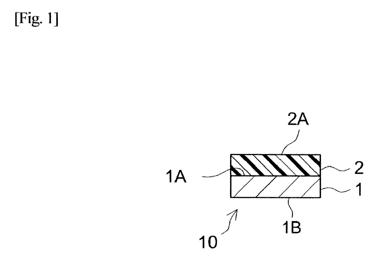

The paint protection sheet (e.g., automobile paint protection sheet used for protection of automobiles and automotive components) according to the present invention comprises a support substrate sheet and a PSA layer provided thereon (typically, on one face of the support substrate). Fig. 1 shows the cross-sectional structure of a paint protection sheet according to an embodiment of the present invention. Paint protection sheet 10 has a constitution such that PSA layer 2 is provided on first face 1 A of support substrate 1, and is used such that surface 2A of PSA layer 2 is adhered to an adherend (an article to be protected, e.g., an article having a painted surface, such as an automobile and automotive components, etc.). Prior to use (i.e., before adhered to an adherend), protection sheet 10 may be in an embodiment such that surface 2A (adhesive face, i.e., the surface to be adhered to an adherend) of PSA layer 2 is protected with a release liner (not shown in the drawing) comprising a release face at least on the PSA-layer side. Alternatively, with second face (back face) 1B of substrate I being a release face, protection sheet 10 may be in an embodiment such that protection sheet 10 is wound in a roll whereby second face 1B contacts PSA layer 2 and protects surface 2A.

<Support substrate>

The art disclosed herein can be applied preferably to a paint protection sheet using as its support substrate a resin sheet primarily comprising a resin component (typically, a resin film formed of a composition primarily comprising a resin component) such as polyolefin, polyester (e.g., polyethylene terephthalate (PET)), or the like. The resin sheet is typically a non-porous resin film. The "non-porous resin film" referred to herein should be conceptually distinguished from the so-called non-woven fabric (i.e., meaning to exclude non-woven fabrics). An especially preferable application may be a paint protection sheet wherein the primary component among resin components constituting the support substrate is a polyolefin-based resin (i.e., the support substrate is a polyolefin-based resin sheet). A support substrate having such a composition is preferable from the standpoint of the recyclability and so on. For example, can be preferably used a polyolefin-based resin sheet of which 50 % by mass or more is a polyethylene (PE) resin or a polypropylene (PP) resin (in other words, the total amount of PE and PP resins combined accounts for 50 % by mass or more of the entire support substrate).

As the polyolefin-based resin sheet (film), can be preferably used a resin sheet (a PP resin sheet) wherein the resin constituting the sheet primarily comprises a PP resin (in other words, the resin comprises a PP resin at a ratio higher than 50 % by mass). For instance, in a preferable resin sheet, the resin comprises a PP resin at a ratio of about 60 % by mass or higher (more preferably about 70 % by mass or higher). From the standpoint of the heat resistance etc., can be preferably used a resin sheet comprising a continuous phase (continuous constitution) of a PP resin. In the resin sheet, the resin may be formed essentially of one, two or more species of PP resin (i.e., the resin consists of PP resins). A paint protection sheet using as the support substrate such a resin sheet that comprises a continuous PP resin phase is preferable because, for instance, the paint protection sheet is more readily prevented from floating above an adherend (paint film), with the floating being caused by a thermal history such as a temperature increase, etc., while being cured outside. With use of such a support substrate coupled with the PSA composition described later, can be obtained a paint protection sheet that exhibits an even higher floating resistance.

The support substrate may have a single-layer structure, or a layered structure with two or more layers. When it has a layered structure, it is preferable that at least one layer comprises a continuous PP resin phase. The remainder of the resin can be a polyolefin-based resin (PE resin, etc.) primarily comprising an olefin-based polymer formed of ethylene or an $\alpha$-olefin having four or more of carbon atoms as the primary monomer, or a resin other than a polyolefin-based resin. An example of a resin sheet that can be preferably used as a support substrate of the paint protection sheet disclosed herein is a polyolefin-based resin sheet of which the resin consists essentially of a PP resin and a PE resin (typically, a PP sheet wherein the primary component of the resin is a PP resin and the remainder is a PE resin).

The primary component of the PP resin can be a polymer (a propylene-based polymer) of various types that contains propylene as a constituent. It can be a PP resin consisting essentially of one, two or more species of propylene-based polymer The concept of the propylene-based polymer referred to herein include, for instance, the following polypropylenes:

Propylene homopolymers (homopolypropylenes) such as isotactic polypropylenes.

Random copolymers (random polypropylenes) of propylene and other $\alpha$-olefin (s) (typically, one, two or more species selected from ethylene and $\alpha$-olefins having 4 to 10 carbon atoms) ; preferably random polypropylenes constituted with propylene as the primary monomer (a main monomer, i.e., a component accounting for 50 % by mass or more of all monomers) ; for instance, a random polypropylene obtained by random copolymerization of 96 to 99.9 mol% of propylene and 0.1 to 4 mol% of other $\alpha$-olefin (s) (preferably ethylene and/or butene) .

Block copolymers (block polypropylenes) comprising a copolymer (preferably a copolymer wherein the primary monomer is propylene) obtained by block copolymerization of propylene and other $\alpha$-olefin (s) (typically, one, two or more species selected from ethylene and $\alpha$-olefins having 4 to 10 carbon atoms), and typically, further comprising as a by-product of the block copolymerization a rubber formed of at least either one of propylene and the other $\alpha$-olefin; for instance, a block polypropylene comprising a polymer obtained by block copolymerization of 90 to 99.9 mol% of propylene and 0.1 to 10 mol% of other $\alpha$-olefin (s) (preferably ethylene and/or butene), and further comprising as a by-product a rubber formed of at least either one of propylene and the other $\alpha$-olefin.

The PP resin can be formed essentially of one, two or more species of such propylene-based polymer, or can be a thermoplastic olefin resin (TPO) or a thermoplastic elastomer (TPE) of a reactor blend type obtainable by copolymerizing a propylene-based polymer with a large amount of a rubber component, or of a dry blend type obtainable by mechanically dispersing the rubber component in a propylene-based polymer. Alternatively, it can be a PP resin comprising a copolymer of propylene and other monomer (functional monomer) containing other functional group(s) in addition to a polymerizing functional group, a PP resin obtained by copolymerizing such a functional monomer with a propylene-based polymer, or the like.

The primary component of the PE resin can be a polymer (an ethylene-based polymer) of various types that contains ethylene as a constituent. It can be a PE resin consisting essentially of one, two or more species of ethylene-based polymer. The ethylene-based polymer can be an ethylene homopolymer or a product of copolymerization (random copolymerization, block copolymerization, etc.) of ethylene as the primary monomer and other $\alpha$-olefin (s) . Preferable examples of the $\alpha$-olefin include $\alpha$-olefins having 3 to 10 carbon atoms such as propylene, 1-butene (which can be a branched 1-butene), 1-hexene, 4-methyl-1-pentene, 1-octene, and the like. It can be a PE resin comprising a copolymer of ethylene and a monomer (functional monomer) containing other functional group (s) in addition to a polymerizing functional group, a PE resin obtained by copolymerizing such a functional monomer with an ethylene-based polymer, or the like. Examples of a copolymer of ethylene and a functional monomer include ethylene-vinyl acetate copolymers (EVA), ethylene- acrylic acid copolymers (EAA), ethylene- methacrylic acid copolymers (EMAA), ethylene- methyl acrylate copolymers (EMA), ethylene- ethyl acrylate copolymers (EEA), ethylene- methyl methacrylate copolymers (EMMA), ethylene- (meth) acrylic acid (i.e., ethylene- acrylic acid, or ethylene- methacrylic acid) copolymers crosslinked by metal ions, and the like.

The density of the PE resin is not particularly limited, and it can be, for instance, about 0.9 g/cm$^3$ to 0.94 g/cm$^3$. Preferable PE resins include low-density polyethylene (LDPE) and linear low-density polyethylene (LLDPE). The PE resin may comprise one, two or more species of LDPE and one, two or more species of LLDPE. There are no particular limitations on the proportions of the respective LDPEs or LLDPEs, or the blend ratio of LDPE to LLDPE, and they can be suitably selected so as to obtain a PE resin that exhibits desirable properties.

Although not particularly limited, as the resin material constituting the support substrate, can be preferably used a resin material having a MFR (melt flow rate) of approximately 0.5 g/10min to 80 g/10min (e.g., 0.5 g/10min to 10 g/ 10min). Herein, the MFR refers to a value measured by method A at a temperature of 230 °C and an applied load of 21.18 N based on JIS K 7210. The resin material can be a polyolefin-based resin (e.g., a PP resin, a PE resin, a blend resin of a PP resin and a PE resin, or the like) having a MFR in the said range.

The resin sheet (preferably a polyolefin-based resin sheet) used as a substrate of the paint protection sheet disclosed herein may contain as necessary suitable components allowed for inclusion in the substrate in accordance with desired properties such as light-blocking ability, weatherability, heat resistance, consistent coating, adhesive properties, and so on. For example, it may suitably contain additives such as pigments (typically inorganic pigments), fillers, anti-oxidant, light-stabilizing agents (meaning to include radical scavengers, UV (ultraviolet ray) absorbers, etc.), slipping agent, antiblocking agent, and so on. Examples of materials that can be preferably used as pigments or fillers include inorganic powders such as titanium oxide, zinc oxide, calcium carbonate, and the like. The amount of an inorganic pigment or a filler can be suitably selected in consideration of the extent of the effects produced by the additive and the substrate moldability suitable for the method (casting, blow molding (inflation molding), etc.) employed for forming the resin sheet. It is usually preferable that the amount of a pigment or a filler (when several species are added, their combined amount) is about 2 to 20 parts by mass (more preferably about 5 to 15 parts by mass) relative to 100 parts by mass of the resin. For example, each additive can be added in an amount that is normally employed in the field of resin sheets used as support substrates in paint protection sheets (e.g., automobile paint protection sheets) or for similar purposes.

The resin sheet (preferably a polyolefin-based resin sheet) can be produced by employing a suitable film formation method heretofore known. For example, can be preferably employed a method that involves extrusion of a molding material containing the resin (preferably, a resin consisting of a PE resin or a resin comprising a PP resin as the primary component and a PE resin as a secondary component) and additives, etc., added as necessary.

In support substrate 1 (typically a resin sheet) shown in Fig. 1, face 1A to which PSA layer 2 is to be provided can be pre-subjected to a surface treatment such as an acid treatment, corona discharge treatment, UV irradiation, plasma treatment, or the like. In support substrate 1, face (back face) I B opposite to the face to which PSA layer 2 is to be provided can be pre-subjected as necessary to a release treatment (e.g., a treatment where a release agent based on silicone, a long-chain alkyl, or fluorine, etc., is applied to form a film having a thickness of typically about 0.01 μm to 1 μm (e.g., 0.01 μm to 0.1 μm)). Such a release treatment can produce effects such as easy unwinding of a rolled paint protection sheet 10, and so on.

The thickness of the support substrate is not particularly limited and can be suitably selected according to the intended purpose. Usually, it is suitable to use a substrate having a thickness of about 300 μm or smaller (e.g., about 10 μm to 200 μm). In a preferable embodiment of the paint protection sheet disclosed herein, the substrate has a thickness of about 10 μm to 100 μm (e.g., about 20 μm to 60 μm). A paint protection sheet using a substrate having such a thickness is preferable, for instance, as an automobile paint protection sheet.

<Polyisobutylene>

The PSA layer included in the paint protection sheet disclosed herein is constituted with a PSA comprising a polyisobutylene as a base polymer. Herein, the "base polymer" in a PSA refers to a primary component (i.e., a component accounting for 50 % by mass or more) among all polymer components contained in the PSA. In a preferable embodiment, 70 % by mass or more of the polymer components contained in the PSA is a polyisobutylene.

In this description, "polyisobutylene" is not limited to an isobutylene homopolymer (homopolyisobutylene), and the term encompasses copolymers in which the primary monomer is isobutylene (in other words, isobutylene is copolymerized at a ratio larger than 50 mol%, or more preferably larger than 70 mol%) . The copolymer can be a copolymer of isobutylene and normal butylene, a copolymer of isobutylene and isoprene (e.g., butyl rubbers such as regular butyl rubber, chlorinated butyl rubber, brominated butyl rubber, partially crosslinked butyl rubber, etc.), a vulcanizate or a modification product of these (e.g., a product obtained by modification with a functional group such as hydroxyl group, carboxyl group, amino group, epoxy group, etc.), or the like. From the standpoint of the stability of adhesive strength (e.g., an ability to suppress an excessive increase in the adhesive strength that is induced by aging or thermal history), preferable examples of a polyisobutylene that can be used include homopolyisobutylenes, copolymers of isobutylene and normal butylene (e.g., isobutylene- normal butylene copolymers in which the copolymerization ratio of isobutylene is smaller than 30 mol%) . Among these, homopolyisobutylenes are preferable.

The molecular weight of such a polyisobutylene is not particularly limited, and for instance, a polyisobutylene having a weight average molecular weight (Mw) of about $10 \times 10^4$ to $150 \times 10^4$ can be suitably selected and used. Several polyisobutylenes having different Mw values can be used together. The Mw ofthe entire polyisobutylene used as the base polymer is preferably in a range of about $20 \times 10^4$ to $150 \times 10^4$ (more preferably about $30 \times 10^4$ to $100 \times 10^4$). The polyisobutylene can be partially or entirely an isobutylene-based polymer (a masticated product) obtained from a high molecular weight polyisobutylene via a mastication process to yield lower molecular weights (preferably to yield a weight average molecular weight in the preferable range described above). The mastication process can be preferably carried out so as to obtain a polyisobutylene having a Mw value equal to approximately 10 % to 80 % of the Mw value prior to the mastication process, It is also preferable to carry out the process so as to obtain a polyisobutylene having a number average molecular weight (Mn) of about $10 \times 10^4$ to $40 \times 10^4$. Such a mastication process can be performed based on the contents of Japanese Patent No. 3878700.

When either the Mw or the Mn is excessively larger than the range given above, it may result in too high a viscosity of the PSA solution, hindering the handling properties (e.g., coating consistency) of the PSA solution. When either the Mw or the Mn is excessively smaller than the range given above, it may result in an insufficient cohesive strength of the PSA, and when used under demanding conditions (e.g., when adhered to a repaired and polished surface), it may be likely to produce adhesive transfers.

The Mw and Mn values herein refer to the values calibrated with polystyrene standard, which can be determined based on gel permeation chromatography (GPC). As a GPC system, can be used, for instance, model number "HLC-8120GPC" available from Tosoh Corporation.

<St/IB block copolymer>

The PSA in the art disclosed herein is characterized by comprising, in addition to a polyisobutylene as the base polymer, a styrene-isobutylene (St/IB) block copolymer as a polymer added to the polyisobutylene (this polymer may be referred to as an "additional polymer" hereinafter). The "St/IB block copolymer" herein refers to a block copolymer comprising at least one St block and at least one IB block. Typical examples of such a St/IB block copolymer include a St-IB structure (diblock copolymer), a St-IB-St structure (triblock copolymer), and the like. As a St/IB block copolymer having three or more blocks, a copolymer having St blocks on both terminals, respectively, can be preferably used. According to a St/IB block copolymer having such a structure, the floating resistance can be further increased.

As the additional polymer included in the PSA in the art disclosed herein, can be used a single species of such St/IB block copolymers, or two or more species of St/IB block copolymer (e.g., St/IB block copolymers differing in one, two or more properties among the following: the numbers of St blocks and IB blocks, their positions, the molecular weights of the respective blocks, the molecular weight of the entire block copolymer, and so on) at a suitable ratio. In a preferable embodiment, a triblock copolymer having a St-IB-St structure accounts for 50 % by mass or more (typically 60 % by mass or more, e.g., 75 % by mass or more, or essentially 100 % by mass) ofthe total amount of the St/IB block copolymer used. According to such an embodiment, can be obtained a protection sheet wherein the floating resistance is effectively increased while impact on other properties (e.g., the temperature-dependency of storage modulus) is limited by the addition of the St/IB block copolymer.

The St/IB block copolymer content can be greater than zero part by mass, but equal to or less than 70 parts by mass relative to 100 parts by mass of the polyisobutylene as the base polymer, or it is usually suitable to be 3 parts by mass or greater, but 60 parts by mass or less (e.g., 5 parts by mass or greater, but 50 parts by mass or less, preferably greater than 5 parts by mass, but 40 parts by mass or less). When the St/IB block copolymer content is too low, the effect to increase the floating resistance may not be sufficiently produced. When the St/IB block copolymer content is too high, the temperature dependence ofthe storage modulus (and even that of adhesive properties such as the adhesive strength, etc.) may tend to turn out greater, or it may become likely to leave residue marks on an adherend surface. In a preferable embodiment, the St/IB block copolymer content is 10 parts by mass or greater, but 40 parts by mass or less (more preferably 10 parts by mass or greater, but 30 parts by mass or less, e.g., 10 parts by mass or greater, but 25 parts by mass or less).

As the St/IB block copolymer in the art disclosed herein, can be preferably used a copolymer having a weight average molecular weight, Mw, of $I \times 10^4$ or larger. When the Mw is too small, the effect to increase the floating resistance tends to decline, and depending on the amount added, it may also become likely to result in adhesive transfers to an adherend surface. It is usually preferable to use a St/IB block copolymer having a Mw of $3 \times 10^4$ or larger (e.g., $5 \times 10^4$ or larger). On the other hand, when the Mw of the St/IB block copolymer is too large, the temperature dependence of the storage modulus may become greater, or the miscibility to the polyisobutylene as the base polymer may tend to be insufficient. Thus, it is usually preferable to use a St/IB block having a Mw value of $30 \times 10^4$ or smaller (typically $20 \times 10^4$ or smaller, e.g., $15 \times 10^4$ or smaller). From the standpoint of the miscibility, can be preferably used a St-IB diblock copolymer or a St-IB-St triblock copolymer wherein the IB block has a Mw value of $2 \times 10^4$ or larger (typically $4 \times 10^4$ to $15 \times 10^4$). In a preferable embodiment, the Mw of the St/IB block is at most one third (e.g., one fifth or smaller than one fifth) the Mw of the polyisobutylene as the base polymer. According to such an embodiment, can be preferably obtained a protection sheet combining high levels of miscibility and adhesive properties. The Mw values of the St/IB block copolymer and other additional polymers refer to values (values calibrated with polystyrene standard) determined based on GPC measurements, similarly to the Mw measurement for the polyisobutylene.

In a preferable embodiment, as the St/IB block copolymer, is used a copolymer containing styrene at 5 % to 50 % (by mass ratio of the styrene residue contained in the entire St/IB block copolymer). For instance, can be preferably used a St/IB block copolymer having a 10 % to 35 % styrene content. When the styrene content is too low, the effect to increase the floating resistance of the protection sheet tends to decline. On the other hand, when the styrene content is too high, the temperature dependence of the storage modulus may become greater, or the miscibility to the polyisobutylene as the base polymer may turn out insufficient. When using several different species of St/IB block copolymer with different styrene contents, it is preferable that their average styrene content is in the range given above.

In the art disclosed herein, the polyisobutylene and the St/IB block copolymer contained in the PSA are preferably selected so that they exhibit good miscibility to each other. This allows producing of a protection sheet having a better visual quality (e.g., having a highly transparent PSA layer). Also from the standpoint of preventing adhesive transfers to an adherend surface, it is preferable that the polyisobutylene and the St/IB block copolymer are readily miscible to each other.

<Tackifier>

The PSA may comprise a tackifier as needed. Examples of a tackifier that can be used preferably include alkyl-phenol resins, terpene-phenol resins, epoxy-based resins, coumarone-indene resins, rosin-based resins, terpene-based resins, alkyd resins, petroleum resins, hydrogenated products of these, and the like. Among these tackifiers, one species can be used solely, or two or more species can be used together.

The tackifier preferably used in the art disclosed herein include phenol- based compounds having a SP value of 8.5 (in $(cal/cm^3)^{1/2}$, both here and hereinafter) or larger (typically 8.5 to 15), amine- based compounds having a SP value of 8.5 or larger (typically 8.5 to 15), and rosins. Such a tackifier, added in a small amount can effectively increase the adhesive properties (e.g., adhesive strength to a hard- to- adhere paint film) . Thus, the art disclosed herein can be practiced preferably in an embodiment where a tackifier having a SP value of 8.5 or larger is added to the PSA in an amount of, for instance, 0.01 to 5 parts by mass (preferably 0.01 to 1 part by mass) relative to 100 parts by mass of the base polymer. Herein, the hard- to- adhere paint film refers to a paint film wherein the n- hexadecane contact angle relative to the paint film surface is 15° or larger. The contact angle can be determined by the following procedures: while keeping the paint film horizontal, an approximately 2 $\mu$L droplet of n- hexadecane is dropped on top of the paint film under an atmosphere at 23 °C and 65 % RH, and the angle formed by the tangent line of the droplet and the paint film surface is measured within one minute from the deposition of the droplet.

As the phenol-based compound and the amine-based compound, it is preferable to use hindered compounds. Preferable examples of the phenol-based compound include phenol resins, alkyl-phenol resins (e.g., alkyl-phenol resins having an alkyl side chain having three or more carbon atoms such as tert-butyl-phenal resins, tert-aminophenol resins and tert-octylphenol resins), rosin-modified phenol-based resins and terpene-modified phenol resins. For the rosin, any rosins (especially, rosins having a SP value of 8.5 or larger) can be preferably used.

Herein, the SP value of a compound indicates the solubility of the compound and is a value calculated from the basic structure of the compound by the method suggested by Fedors. In particular, from the vaporization energy, $\Delta e$ (cal), of each atom or an atomic group at 25 °C as well as the molar volume, $\Delta v$ ($cm^3$), of the atom or the atomic group at the same temperature, the SP value is calculated according to the next equation:

$$SP\ value\ (\delta) = (\Sigma\Delta e/\Sigma\Delta v)^{1/2}$$

 (Reference document: Hideki Yamamoto, "SP value fundamentals, application, and calculation method", 4th edition, published by Johokiko Co., Ltd., April 3, 2006, pp. 66- 67) .

Examples of commercially-available phenol-based compounds having a SP value of 8.5 or larger include product name "DUREZ 19900" available from Sumitomo Durez Co., Ltd., and product names "IRGANOX 1010", "IRGANOX 1330", "IRGANOX 3114", "IRGANOX 565", and "IRGANOX 5057", etc., available from Nihon Ciba Geigy K. K. Examples of commercially-available amine-based compounds having a SP value of 8.5 or larger include product names "CHIMASSORB 944" and "TINUVIN 770" available from Nihon Ciba Geigy K. K.

It is considered that when a phenol-based compound or an amine-based compound having the prescribed SP value is added to a PSA comprising a polyisobutylene as the base polymer, it contributes to increasing the adhesive strength to a hard-to-adhere paint film by forming a unique miscible state such that the compound is concentrated around the interface of the PSA and the adherend (paint film). From the standpoint of forming such a miscible state and increasing the adhesive strength, it is usually preferable to use a tackifier having a weight average molecular weight (Mw) of 300 or larger (more preferably 400 or larger, or even more preferably 500 or larger, e.g., 1000 or larger). A preferable tackifier has a Mw value of $3 \times 10^4$ or smaller (more preferably $0.5 \times 10^4$ or smaller).

Particularly preferable examples of the tackifier used in a PSA in the art disclosed herein include phenol-based compounds and amine-based compounds, with each having a SP value of 9.5 or larger (typically 9.5 to 15). For example, among the phenol-based compounds having a SP value of 9.5 or larger and the amine-based compounds having a SP value of 9.5 or larger listed in Japanese Patent Application Publication No. H9-3420, a single species or a suitable combination of different species can be used.

When the PSA comprises a tackifier, its amount can be, for instance, 50 parts by mass or smaller (preferably 30 parts by mass or smaller, or more preferably 15 parts by mass or smaller) relative to 100 parts by mass of the base polymer. It is usually suitable that its amount is 0.01 part by mass or larger. From the standpoint of preventing contamination on the adherend or adhesive transfers thereto, the amount of tackifier is preferably 0.0 1 to 5 parts by mass relative to 100 parts by mass of the base polymer, or more preferably 0.01 to 2 parts by mass (typically 0.05 to 1 part by mass, e.g., 0.1 to 1 part by mass).

To an extent that does not largely disturb the effects obtainable by the present invention, a PSA in the art disclosed herein may contain as an optional component other additional polymer (s) that is not a St/IB block copolymer. Examples of such an optional additional polymer that can be suitably employed include known polymers such as rubber-based polymers, acrylic polymers, polyesters, polyurethanes, polyethers, silicone- based polymers, polyamides, fluorine-based polymers, poly- α- olefins, ethylene- vinyl acetate copolymers, and the like. Examples of the rubber- based polymers include natural rubber; styrene- butadiene rubber (SBR) ; polyisoprene; ABA- type block copolymer rubbers and their hydrogenated products, for example, styrene- butadiene- styrene block copolymers (SBS), styreneisoprene-styrene block copolymer (SIS), styrene- (vinyl isoprene)- styrene block copolymer (SVIS), styrene- ethylene- butylene-styrene block copolymers (SEBS), styrene- ethylene- propylene- styrene block copolymers (SEPS) ; and the like. In usual, the amount of such an optional additional polymer (when two or more species of optional additional polymers are used, their combined amount) is suitably 30 parts by mass or less relative to 100 parts by mass ofthe polyisobutylene as the base polymer and preferably equal to or less than the amount of the St/IB block copolymer. Alternatively, the PSA may have a composition essentially free of such an optional additional polymer (e.g., a composition containing such an optional additional polymer in an amount less than 0.1 part by mass relative to 100 parts by mass of the base polymer) .

The PSA used in the paint protection sheet disclosed herein may contain as necessary suitable components (additives) allowed for inclusion in the PSA. Examples of such additives include softeners, release agents, pigments, fillers, antioxidant, light-stabilizing agents (meaning to include radical scavengers, UV absorbers, etc.) and the like. Examples of softener include rubber-based materials having low molecular weights, process oils (typically paraffin-based oils), petroleum-based softeners, epoxy-based compounds, and the like. Examples of a release agent include silicone-based release agents, paraffin-based release agents, polyethylene wax, acrylic polymers and the like. When using a release agent, its amount can be, for instance, about 0.01 to 5 parts by mass relative to 100 parts by mass of the base polymer. Alternatively, the PSA may have a composition essentially free of such a release agent. Examples of pigments and fillers include inorganic powders such as titanium oxide, zinc oxide, calcium oxide, magnesium oxide, silica and the like.

Each of these additives can be used solely as a single species or in a combination of two or more species. Each additive can be used in an amount usually employed in the field of the PSA for paint protection sheets (e.g., automobile paint protection sheets). The total amount of the tackifier and other additives combined is preferably 30 parts by mass or less (more preferably 15 parts by mass or less) relative to 100 parts by mass of the base polymer.

The PSA layer can be formed according to a known method for forming a PSA layer in a PSA sheet. For instance, can be preferably employed a method (direct method) where a PSA layer is formed by directly providing (typically applying) a fluid composition (a PSA solution) to a support substrate and drying the composition, with the fluid composition being a mixture obtained by dissolving or dispersing in a suitable solvent (toluene, heptane, hexane, ethyl acetate, etc.) a PSA-layer-forming material comprising a polyisobutylene and a St/IB block copolymer as well as additives, etc., added as necessary. Alternatively, can be employed a method (transfer method) where a PSA layer is transferred to a support substrate, with the PSA layer having being formed in advance on a highly releasable surface (e.g., a release liner surface, the back face of a support substrate that has been processed with a release treatment, etc.) by applying the PSA composition thereto and drying the composition. The PSA layer in the art disclosed herein typically has a continuous form, but it can have a regular or random pattern of dots, stripes, etc., depending on the purpose and use.

As a solvent used in preparation of the PSA solution, can be preferably used a solvent that can dissolve both the polyisobutylene and the St/IB block copolymer. Toluene is a preferable example of such a solvent. The solids content (NV) in the PSA solution can be, for instance, 5 to 30 % by mass, or it is usually suitable to be 10 to 25 % by mass.

The thickness of the PSA layer is not particularly limited and can be suitably selected according to the purpose. In usual, it is suitably about 100 $\mu$m or smaller (e.g., 2 $\mu$m to 100 $\mu$m), preferably about 3 $\mu$m to 30 $\mu$m, or more preferably about 5 $\mu$m to 20 $\mu$m. For example, this range is suitable for the thickness of a PSA layer included in an automobile paint protection sheet.

With respect to the PSA in the art disclosed herein, the room temperature storage modulus A measured at a frequency of 10 Hz and a temperature of 23 °C and the high temperature storage modulus B measured at a frequency of 10 Hz and a temperature of 70 °C may satisfy the next inequality: A/B < 1.3. In general, since the storage modulus tends to decrease as the temperature increases, A/B is normally greater than or equal to one (A/B$\geq$1) (typically, A/B > 1). It indicates that the larger the value of A/B, the greater the temperature dependence of the storage modulus over the temperature range from 23 °C to 70 °C. A PSA having a A/B value smaller than 1.3 is preferable as it exhibits stable adhesive properties over a broad temperature range. For example, with respect to a paint protection sheet adhered to the outer paint film of an automobile body, the temperature at which the paint protection sheet is removed could greatly vary (e.g., such a case where a protection sheet is removed from an automobile stored outside under direct sunlight in midsummer, a case where a protection sheet is removed from an automobile stored in an environment at about 23 °C, etc.). In a PSA having a A/B value near 1 (e.g., smaller than 1.3, preferably 1.2 or smaller, more preferably 1.1 or smaller), temperature differences do not cause significant changes in the adhesive properties (e.g., adhesive strength). Thus, a surface protection sheet comprising the said PSA layer can provide suitable protection over a broad temperature range. The protection sheet can be properly removed as well over a broad temperature range.

The storage moduli A and B can be determined, for instance, as follows: On a typical rheometer (e.g., dynamic viscosity spectrometer under model name "ARES", available from Rheometrics Scientific, Inc.), a sample of 2 mm thickness is set in the parallel plates having a diameter of 8 mm, respectively, and subjected to measurements at the prescribed frequency. The temperature range for a measurement and the rate of temperature increase are not particularly limited and can be suitably selected according to the type of rheometer used. For example, the measurement can taken over a temperature range (e.g., from -50 °C to 120 °C) including at least the range from 20 °C to 70 °C (preferably from 0 °C to 80 °C). The rate of temperature increase can be about 1 °C/min to 10 °C/min (e.g., 5 °C/min).

In a preferable embodiment, the room temperature storage modulus of the PSA is preferably $4.5 \times 10^5$ Pa or lower, or more preferably $4.0 \times 10^5$ Pa or lower (typically lower than $4.0 \times 10^5$ Pa). According to a PSA exhibiting such a room temperature storage modulus, can be obtained a protection sheet with which deposition of residue marks on an adherend surface is better prevented. A preferable PSA usually exhibit a room temperature storage modulus A of $1.0 \times 10^5$ Pa or higher (e.g., $2.0 \times 10^5$ Pa or higher). The PSA has a high temperature storage modulus B of preferably $4.5 \times 10^4$ Pa or lower or more preferably $4.0 \times 10^5$ Pa or lower (typically lower than $4.0 \times 10^5$ Pa). A preferable PSA usually has a high temperature storage modulus B of $1.0 \times 10^5$ Pa or higher (e.g., $2.0 \times 10^5$ Pa or higher).

The PSA layer in the art disclosed herein is typically constituted with a non-crosslinked PSA. Herein, the PSA layer constituted with a non-crosslinked PSA refers to a PSA layer that has not been deliberately subjected to a process (a crosslinking process, e.g., addition of a crosslinking agent) to form chemical bonds among polymers contained in the PSA while the layer is being formed. Such a PSA layer have preferable properties for a PSA layer in a paint protection sheet, such as low likelihood to leave residue marks on a paint film, etc., since essentially no strain is stored internally (even if some strain is temporally built up, it can be readily diminished).

The paint protection sheet disclosed herein may result in a peeled length smaller than 40 mm (typically 0 mm or larger, but smaller than 40 mm, preferably 0 mm or larger, but 35 mm or smaller) in the floating resistance test carried out under the conditions according to the worked examples described later. In addition, in the mark- free removability test carried out under the conditions according to the worked examples described later, it may produce no residue marks (evaluated as "E" (excellent) ) . In the adhesive transfer resistance test carried out under the conditions according to the worked examples described later, it may not produce any adhesive transfer or sticky strings (evaluated as "E" (excellent) ) . An especially preferable paint protection sheet satisfies all the three properties (the floating resistance, mark- tree removability, adhesive transfer resistance) . An even more preferable paint protection sheet comprises a PSA layer that satisfy the three properties and also has high miscibility to the polyisobutylene and the St/IB block copolymer.

In the adhesive strength test carried out under the conditions described later in the worked examples, it is preferable that the paint protection sheet disclosed herein has a 180° peel strength in a range from 3 N/25mm to 10 N/25mm (e.g., from 5 N/25mm to 10 N/25mm) when measured at a peeling speed of 300 mm/min (i.e., 0.3 m/min) either after stored at 23 °C for 48 hours or after stored at 70 °C for 48 hours (preferably, in both conditions, in other words, after stored at 23 °C for 48 hours and also after stored at 70 °C for 48 hours). Also, in each case after being stored at 23 °C for 48 hours or at 70 °C for 48 hours, the 180° peel strength at a peeling speed of 30 m/min is preferably in the range from 3 N/25mm to 10 N/25mm (e.g., from 4 N/25mm to 10 N/25mm). When the peel strength is too low, the protection sheet may spontaneously peel off from the adherend surface when subjected to external force, etc. When the peel strength (especially the peel strength at a peeling speed of 30 m/min) is too high, when the protection sheet is removed after use from the adherend (an article to be protected), the handling properties may tend to degrade.

In practicing the present invention, although it is unnecessary to reveal why the objectives of the present application are accomplished by employing the constitution described above, it may be considered as follows: A PSA using a St/IB block copolymer as the base polymer exhibits a high cohesive strength, which can be advantageous in terms of the floating resistance when compared to a PSA using a polyisobutylene as the base polymer. However, it is not suitable for a paint protection sheet because it is likely to leave residue marks on the adherend surface (as in Examples 16, 17 described later). On the contrary, use of a polyisobutylene as the base polymer combined with a St/IB block copolymer added as a secondary component is considered to greatly increase the floating resistance while keeping the characteristics of the polyisobutylene, resulting in producing of a high-performance paint protection sheet.

EXAMPLES

Several worked examples relating to the present invention are described below, but the present invention is not intended to be limited to these examples. In the description below, "parts" and "%" are based on the mass unless otherwise specified.

<Example 1>

A substrate-molding material mixture containing 70 parts of a homopolypropylene (trade name "NOVATEC PP FY4" available from Japan Polypropylene Corporation), 20 parts of a LLDPE (trade name "KERNEL KF380" available from Japan Polyethylene Corporation) and 10 parts of rutile titanium(IV) oxide (trade name "TIPAQUE CR-95" available from Ishihara Sangyo Kaisha, Ltd.) was melted and compounded in a film-forming device, and the resultant was extruded from the T-die thereof to form a PP resin film (support substrate) of 40 $\mu$m thickness. To the back face (opposite to the face to be provided with a PSA layer) of this substrate, was applied a long-alkyl-based release agent to form a coating of about 0.05 $\mu$m thickness after dried (release treatment). The support substrate according to the present example was thus obtained.

100 parts of a polyisobutylene as a base polymer, 20 parts of a St/IB block copolymer, 0.5 part of tackifier and 0.5 part of a UV absorber were mixed with toluene up to a combined amount of 15 % to prepare a PSA solution according to the present example. For the polyisobutylene, was used trade name "OPPANOL B-80" (Mw approximately $90 \times 10^4$, Mn approximately $25 \times 10^4$) available from BASF. For the St/IB block copolymer, was used trade name "SIBSTER 062T" (or abbreviated to "062T" hereinafter) available from Kaneka Corporation. 062T consists essentially of a triblock copolymer having a St-IB-St structure, and it has a Mw of about $6 \times 10^4$ and a 23 % styrene content (based on the mass; the same applies hereinafter). For the tackifier, was used a p-tert-octylphenol resin under trade name "DUREZ 19900" (Mw 1300, SP value 11.2) available from Sumitomo Durez Co. Ltd. For the UV absorber, "TINUVIN 326" available from BASF was used.

The PSA solution was applied to the front face (the face with no release treatment) of the support substrate to form a PSA layer of 10 $\mu$m thickness, and the resultant was wound up into a roll. A PSA sheet sample according to the present example was thus fabricated.

<Example 2>

As a St/IB block copolymer, in place of 062T used in Example 1, was used trade name "SIBSTER 062M" (or abbreviated to "062M" hereinafter) available from Kaneka Corporation. 062M contains a St-IB-St triblock copolymer and a St-IB diblock copolymer at a mass ratio of 60:40, and it has a Mw value of about $5 \times 10^4$ and a 23 % styrene content. Otherwise in the same manner as Example 1, a PSA sheet sample was fabricated.

<Example 3>

As a St/IB block copolymer, in place of 062T used in Example 1, was used trade name "SIBSTER 072T" (or abbreviated to "072T" hereinafter) available from Kaneka Corporation. 072T consists essentially of a St-IB-St triblock copolymer, and it has a Mw of about $6.5 \times 10^4$ and a 23 % styrene content. Otherwise in the same manner as Example 1, a PSA sheet sample was fabricated.

<Example 4>

As a St/IB block copolymer, in place of 062T used in Example 1, was used trade name "SIBSTER 073T" (or abbreviated to "073T" hereinafter) available from Kaneka Corporation. 073T consists essentially of a St-IB-St triblock copolymer, and it has a Mw of about $7 \times 10^4$ and a 30 % styrene content. Otherwise in the same manner as Example 1, a PSA sheet sample was fabricated.

<Example 5>

As a St/IB block copolymer, in place of 20 parts of 062T used in Example I, was used 5 parts of trade name "SIBSTER 102T" (or abbreviated to "102T" hereinafter) available from Kaneka Corporation. 102T consists essentially of a St-IB-St triblock copolymer, and it has a Mw of about $10 \times 10^4$ and a 15 % styrene content. Otherwise in the same manner as Example 1, a PSA sheet sample was fabricated.

<Example 6 to Example 8>

The amount of 102T in Example 5 was changed to 10 parts (Example 6), 20 parts (Example 7) or 50 parts (Example 8) relative to 100 parts of the polyisobutylene. Otherwise in the same manner as Example 5, PSA solutions were prepared, respectively. Except that these PSA solutions were used, in the same manner as Example 1, PSA sheet samples were fabricated, respectively.

<Example 9>

In place of 0.5 part of "DUREZ 19900" in Example 7, was used 5 parts of a tackifier under trade name "ARKON P100" (alicyclic saturated hydrocarbon resin; SP value 8.2) available from Arakawa Chemical Industries, Ltd. Otherwise in the same manner as Example 7, a PSA solution was prepared. Except that this PSA solution was used, in the same manner as Example 1, a PSA sheet sample was fabricated.

<Example 10>

In place of 0.5 part of "DUREZ 19900" in Example 7, was used 20 parts of a low molecular weight polyisobutylene (or abbreviated to "low-Mw PIB" hereinafter) under trade name "OPPANOL B-12SFN" (Mw approximately $7 \times 10^4$, Mn approximately $2.6 \times 10^4$). Otherwise in the same manner as Example 7, a PSA solution was prepared. Except that this PSA solution was used, in the same manner as Example 1, a PSA sheet sample was fabricated.

<Example 11>

As a St/IB block copolymer, in place of 20 parts of 062T used in Example 1, was used 10 parts of trade name "SIBSTER 103T" (or abbreviated to "103T" hereinafter) available from Kaneka Corporation. 103T consists essentially of a St-IB-St triblock copolymer, and it has a Mw of about $10 \times 10^4$ and a 30 % styrene content. Otherwise in the same manner as Example 1, a PSA sheet sample was fabricated.

<Example 12>

The amount of 103T in Example 11 was changed to 20 parts relative to 100 parts of the polyisobutylene. Otherwise in the same manner as Example 11, a PSA solution was prepared. Except that this PSA solution was used, in the same manner as Example I, a PSA sheet sample was fabricated.

<Example 13>

In the present example, in place of the St/IB block copolymer used in Example 1, was used a non-crystalline polypropylene under trade name "TAFTHREN H5002" (Mw $20 \times 10^4$) available from Sumitomo Chemical Co., Ltd. Otherwise in the same manner as Example 1, a PSA sheet sample was fabricated.

<Example 14>

In the present example, in place of the St/IB block copolymer used in Example 1, was used trade name "DYNARON 8600P" (Mw $9 \times 10^4$, 15 % styrene content) available from Sumitomo Chemical Co., Ltd. Otherwise in the same manner as Example 1, a PSA sheet sample was fabricated.

<Example 15>

In the present example, no St/IB block copolymer was used, and the polyisobutylene was used solely as the polymer component. Otherwise in the same manner as Example I, a PSA sheet sample was fabricated.

<Example 16>

In place of the polyisobutylene in Example 15, 062M (St/IB block copolymer) was used. Otherwise in the same manner as Example 15, a PSA solution was prepared. Except that this PSA solution was used, in the same manner as Example I, a PSA sheet sample was fabricated.

<Example 17>

In place of the polyisobutylene in Example 15, 102T (St/IB block copolymer) was used. Otherwise in the same manner as Example 15, a PSA solution was prepared. Except that this PSA solution was used, in the same manner as Example 1, a PSA sheet sample was fabricated.

The PSA sheet samples fabricated in Examples 1 to 17 were subjected to the evaluation tests described below. The results are shown along with the PSA compositions of the respective examples in Tables 1 to 3.

[Measurement of storage modulus G']

The same materials used for preparation of each PSA solution (excluding toluene) were mixed in a twin screw mixer, and the mixture was molded into a film of 2 mm thickness. From this, a measurement sample was stamped out to suit parallel plates of 8 mm diameter, and the sample was set on a dynamic viscosity spectrometer (model name "ARES", available from Rheometrics Scientific, Inc.). Based on JIS K 7244-1, while applying a shear strain at a frequency of 10 Hz, the temperature was increased from -50 °C to 120 °C at a rate of 5 °C/min. From the resulting data, were determined the storage modulus A at 23 °C and the storage modulus B at 70 °C.

[Adhesive strength (peel strength)]

The adhesive strength was measured based on JIS Z 0237(2000): The PSA sheet sample according to each example was cut to a 25 mm wide strip to prepare a test piece. In a standard environment at 23 °C and 50 % RH, a painted steel plate was degreased with petroleum benzine and the test piece was adhered thereto, with the plate having been prepared by coating a steel plate with an acid-epoxy cross-linked acrylic paint (trade name "KINO 121 0TW" available from Kansai Paint Co., Ltd.). The adhesion was carried out by pressure-boding the test piece by rolling over back and forth once at a rate of 3 m/min with a 2 kg rubber roller specified in JIS Z 0237:2000. The test piece was stored under the standard environment for 48 hours. Subsequently, in the same standard environment, using a tensile tester, the peel strength (N/25mm) was measured at a peel angle of 180° for two standard peeling speeds (clock head speeds) of 300 mm/min and 30 m/min, respectively.

Another test piece adhered similarly on a steel plate coated with an acid-epoxy cross-linked acrylic paint was stored in a dry oven at 70 °C for 48 hours. The test piece was then removed from the oven and left in the standard environment for over 2 hours. Following this, in a standard environment, the 180° peel strength (N/25mm) was measured in the same manners for two standard peeling speeds of 300 mm/min and 30 m/min.

For each sample, three measurements were taken under the respective conditions. Tables 1 to 3 show their arithmetic mean values.

[Floating resistance]

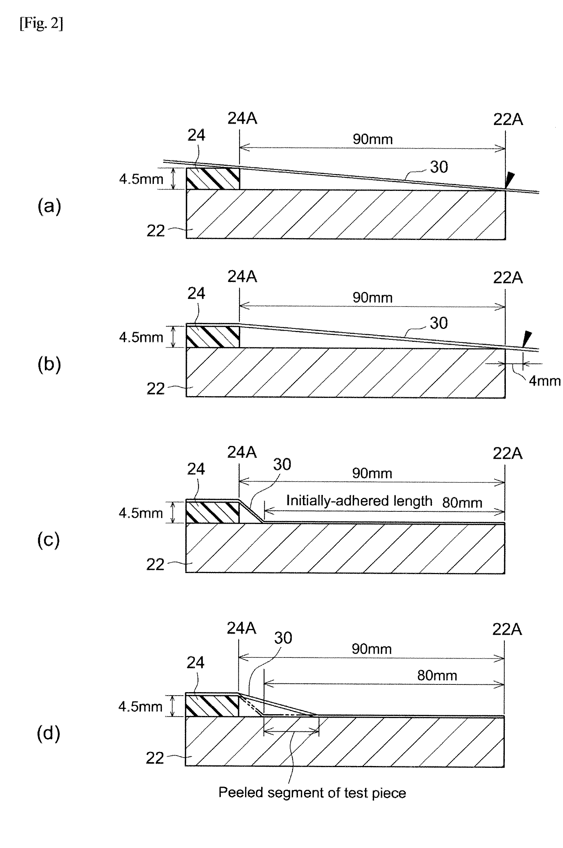

As shown in Fig. 2(a), 4.5 mm thick acrylic plate 24 was fixed at one end on a face of plate 22 coated with the acid-epoxy cross-linked acrylic paint (trade name "KINO 1210TW" available from Kansai Paint Co., Ltd.). The fixed position of acrylic plate 24 was adjusted so that the distance from opposite end 22A of painted plate 22 to proximal end 24A of acrylic plate 24 was 90 mm. The PSA sheet sample according to each example was cut into a 25 mm wide strip to prepare test piece 30. In a standard environment at 23 °C and 50 % RH, with cautions to prevent the test piece from both loosening and stretching, test piece 30 was positioned linearly (with the cross-section along the length direction of test piece 30 lining up) across from acrylic plate 24 to opposite end 22A of the painted plate. Subsequently, as shown in Fig. 2(b), one end of the length direction of test piece 30 was adhered to the upper face of acrylic plate 24, and while pulling test piece 30 into the length direction by the other end thereof to produce a 4 mm (4.4 %) extension, using a hand-held roller, test piece 30 was adhered to painted plate 22 across from opposite end 22A of the painted plate to the 80 mm line (initially-adhered length) as shown in Fig. 2(c). The resultant was stored in the standard environment, the peeled length  (length of the peeled segment from the initially-adhered length; see Fig. 2(d)) was measured after a lapse of 48 hours from the adhesion. From the results, the floating resistance was evaluated into the following grades:

E (excellent): peeled length smaller than 40 mm.
I (intermediate): peeled length of 40 mm or larger, but smaller than 50 mm.
P (poor): peeled length of 50 mm or larger.

[Mark-free removability]

The PSA sheet sample according to each example was cut into a 50 mm by 80 mm rectangle to prepare a test piece. This test piece was adhered to a plate coated with the acid-epoxy cross-linked acrylic paint (trade name "KINO 1210TW" available from Kansai Paint Co., Ltd.) while intentionally forming wrinkles and trapping air bubbles, and the resultant was stored in a dry oven at 70 °C for 7 days. The test piece was removed from the oven and stored in a standard environment at 23 °C and 50 % RH for 2 hours. Subsequently, the test piece was peeled off from the painted plate. With respect to the region of the plate to which the test piece had been adhered, the surface of the paint film was visually inspected, and the presence or absence of residue marks was assessed. From the results, the mark-free removability was evaluated into the following grades:

E (excellent): no residue marks were observed, or minute residue marks were observed, but disappeared after heated in an oven at 80 °C for one hour.
I (intermediate): residue marks were observed, but faded to an acceptable level for practical use when heated in an oven at 80 °C for one hour.
P (poor): residue marks were observed and were not faded even after heated in an oven at 80 °C for one hour.

[Adhesive transfer resistance]

For deliberately creating a surface highly susceptible to adhesive transfers, the paint surface of a 45 cm by 30 cm steel plate coated with an alkyd-melamine-based paint (trade name "TM13RC" available from Kansai Paint Co., Ltd.) was polished with a polishing agent (trade name "HARD 5982-1-L" available from Sumitomo 3M Ltd.) at 1500 rpm across from north to south and east to west for 5 minutes, using an electric polisher (model number "PV7001C" available from Makita Corporation) equipped with a wool buff (trade name "959-721" available from Hitachi Koki Co., Ltd.). The polishing agent was subsequently removed from the surface using a finishing cotton flannel cloth, and the polished  plate was used as an adherend. These procedures were carried out in a standard environment at a temperature of 23 °C and 50 % RH.
The PSA sheet sample according to each example was cut into a 50 mm wide strip to prepare a test piece. The test piece was pressure-bonded to the adherend and the resultant was stored in an environment at 80 °C for 4 days and then in the standard environment for 6 hours. It was further stored for 4 hours in an environment at 0 °C where adhesive transfers are likely to occur. Subsequently, in the same environment, the test piece was hand-peeled from the adherend by a test operator at a peel angle of approximately 90° and a peeling speed of about 100 mm/min. During the peeling procedure, behaviors of the PSA at the interface between the adherend surface and the PSA layer were inspected. After the peeling procedure, with respect to the post-peel paint film surface, the presence or absence of adhesive transfers was visually inspected. Based on the results of these inspections, the adhesive transfer resistance was evaluated into the following grades:

E (excellent): no sticky strings were observed during the peeling procedure and no adhesive transfers were observed, either.
I (intermediate): some sticky strings were observed during the peeling procedure, but no adhesive transfers were observed.
P (poor): adhesive transfers were observed.

[Miscibility]

The PSA solution prepared in each example was applied to and dried on a transparent PET film to form a PSA film of about 1 mm thickness. The PSA film was visually inspected, and the miscibility was evaluated into the following grades:

G (good): the PSA film is transparent (good miscibility).

P (poor): the PSA film is turbid (poor miscibility).

[Table 1]

Table 1

| | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| PSA composition (parts by mass) | Polyisobutylene | 100 | 100 | 100 | 100 | 100 | 100 | 100 | 100 | 100 | 100 |
| | Additional polymer | 20 | 20 | 20 | 20 | 5 | 10 | 20 | 50 | 20 | 20 |
| | DUREZ 19900 | 0.5 | 0.5 | 0.5 | 0.5 | 0.5 | 0.5 | 0.5 | 0.5 | - | - |
| | ARKON P100 | - | - | - | - | - | - | - | - | 5 | - |
| | Low-Mw PIB | - | - | - | - | - | - | - | - | - | 20 |
| | TINUVIN 326 | 0.5 | 0.5 | 0.5 | 0.5 | 0.5 | 0.5 | 0.5 | 0.5 | 0.5 | 0.5 |
| Additional polymer | St/IB block copolymer | 062T | 062M | 072T | 073T | 102T | | | | | |
| | triblock/diblock (mass ratio) | 100/0 | 60/40 | 100/0 | 100/0 | 100/0 | | | | | |
| | Mw ($\times 10^4$) | 6 | 5 | 6.5 | 7 | 10 | | | | | |
| | Styrene content (% by mass) | 23 | 23 | 23 | 30 | 15 | | | | | |
| Storage modulus G' (Pa) | 10Hz — 23°C A ($\times 10^5$) | 3.6 | 4.1 | 3.7 | 3.9 | 3.5 | 3.5 | 3.7 | 4.3 | 3.3 | 2.8 |
| | 10Hz — 70°C B ($\times 10^5$) | 3.5 | 3.6 | 3.6 | 3.6 | 3.4 | 3.4 | 3.5 | 3.8 | 3.0 | 2.4 |
| | A/B | 1.0 | 1.1 | 1.0 | 1.1 | 1.0 | 1.0 | 1.1 | 1.2 | 1.1 | 1.2 |
| Adhesive strength (N/25mm) | 23°C — 0.3m/min | 8.8 | 9.2 | 8.3 | 8.4 | 8.7 | 8.4 | 8.1 | 8.4 | 8.9 | 9.1 |
| | 23°C — 30m/min | 6.4 | 6.8 | 6.6 | 5.6 | 6.0 | 5.5 | 4.9 | 5.1 | 5.2 | 6.5 |
| | 70°C — 0.3m/min | 9.6 | 9.5 | 9.1 | 9.9 | 8.8 | 8.7 | 8.8 | 8.6 | 9.1 | 9.3 |
| | 70°C — 30m/min | 9.7 | 9.7 | 8.6 | 7.2 | 7.1 | 7.3 | 7.7 | 8.7 | 8.2 | 6.4 |
| Floating Resistance | Peeled length (mm) | 37 | 30 | 37 | 35 | 40 | 34 | 31 | 31 | 30 | 32 |
| | Grade | E | E | E | E | I | E | E | E | E | E |
| Mark-free removability | Grade | E | E | E | E | E | E | E | I | E | E |
| Adhesive transfer resistance | Grade | E | E | E | E | E | E | E | E | E | E |
| Miscibility | Grade | G | G | G | G | G | G | G | G | G | G |

[Table 2]

Table 2

| | | | Ex. 11 | Ex. 12 | Ex. 13 | Ex. 14 |
|---|---|---|---|---|---|---|
| PSA composition (parts by mass) | | Polyisobutylene | 100 | 100 | 100 | 100 |
| | | Additional polymer | 10 | 20 | 20 | 20 |
| | | DUREZ 19900 | 0.5 | 0.5 | 0.5 | 0.5 |
| | | TINUVIN 326 | 0.5 | 0.5 | 0.5 | 0.5 |
| Additional polymer | | St/IB block copolymer | 103T | | - | - |
| | | Non-crystalline PP | - | | TAFTHREN H5002 | - |
| | | SEBS | - | | - | DYNARON 8600P |
| | | triblock/diblock (mass ratio) | 100/0 | | - | - |
| | | Mw ($\times 10^4$) | 10 | | 20 | 9 |
| | | Styrene content (% by mass) | 30 | | 0 | 15 |
| Storage modulus G' (Pa) | 10Hz | 23°C A ($\times 10^5$) | 3.9 | 4.1 | 4.2 | 4.1 |
| | | 70°C B ($\times 10^5$) | 3.7 | 3.7 | 4.2 | 3.5 |
| | | A/B | 1.1 | 1.1 | 1.0 | 1.z |
| Adhesive strength (N/25mm) | 23°C | 0.3m/min | 8.4 | 8.4 | 7.7 | 8.8 |
| | | 30m/min | 5.3 | 5.4 | 1.0 | 5.4 |
| | 70°C | 0.3m/min | 8.8 | 8.7 | 8.0 | 9.6 |
| | | 30m/min | 7.4 | 7.5 | 1.4 | 12.8 |
| Floating Resistance | | Peeled length (mm) | 31 | 32 | 40 | 34 |
| | | Grade | E | E | I | E |
| Mark-free removability | | Grade | E | E | I | P |
| Adhesive transfer resistance | | Grade | E | E | E | E |
| Miscibility | | Grade | G | G | P | P |

[Table 3]

Table 3

| | | | Ex. 15 | Ex. 16 | Ex. 17 |
|---|---|---|---|---|---|
| PSA composition (parts by mass) | Base polymer | Polyisobutylene | 100 | - | - |
| | | St/IB block copolymer 062M | - | 100 | - |
| | | St/IB block copolymer 102T | - | - | 100 |
| | | Additional polymer | 0 | 0 | 0 |
| | | DUREZ 19900 | 0.5 | 0.5 | 0.5 |
| | | TINUVIN 326 | 0.5 | 0.5 | 0.5 |
| Storage modulus G' (Pa) | 10Hz | 23°C A ($\times 10^5$) | 3.4 | 6.8 | 5.1 |
| | | 70°C B ($\times 10^5$) | 3.3 | 3.1 | 4.1 |
| | | A/B | 1.0 | 2.2 | 1.3 |

(continued)

| | | | Ex. 15 | Ex. 16 | Ex. 17 |
|---|---|---|---|---|---|
| Adhesive strength (N/25mm) | 23°C | 0.3m/min | 8.8 | 8.3 | 7.7 |
| | | 30m/min | 6.5 | 4.5 | 2.7 |
| | 70°C | 0.3m/min | 9.0 | 9.0 | 9.0 |
| | | 30m/min | 6.3 | 12.4 | 7.8 |
| Floating Resistance | | Peeled length (mm) | 53 | 25 | 28 |
| | | Grade | P | E | E |
| Mark-free removability | | Grade | E | P | P |
| Adhesive transfer resistance | | Grade | I | E | E |
| Miscibility | | Grade | - | - | - |

As shown in Tables 1 to 3, with respect to the PSA sheet samples according to Examples I to 12 each comprising a PSA that comprises a polyisobutylene as the base polymer and further comprises a St/IB block copolymer in an amount of 70 parts or smaller (more specifically, 5 parts to 50 parts) relative to 100 parts of the polyisobutylene, the floating resistance was clearly increased when compared to the sample (Example 15) containing no St/IB block copolymer. In particular, according to Examples 1 to 12, when compared to Example 15, the peeled length in the floating resistance test was shortened by at least 13 mm (by 24 % or more). Each of Examples 1 to 12 also exhibited adhesive transfer resistance to a level equal to or higher than that of Example 15 as well. Each of the samples according to Examples I to 12 was found to exhibit an adhesive strength (180° peel strength) appropriate as a paint protection sheet.

With respect to Example 13 using a non-crystalline polypropylene in place of a St/IB block copolymer as a polymer added to the polyisobutylene, while the floating resistance increased somewhat, the adhesive strength at a peeling speed of 30 m/min decreased, thereby degrading the performance as a protection sheet. In addition, because the polyisobutylene and the non-crystalline polypropylene were  poorly miscible to each other, the PSA layer appeared turbid. With respect to Example 14 using a SEBS in place of a St/IB block copolymer, while the floating resistance increased, the mark-free removability notably declined. In addition, upon storage at 70 °C for 48 hours, the adhesive strength at a peeling speed of 30 m/min increased greatly, and there were some problems in the stability of the adhesive strength and the workability during peeling procedures. Furthermore, because the polyisobutylene and the SEBS were poorly miscible to each other, the PSA layer appeared turbid. Examples 16 and 17 each using a St/IB block copolymer as the base polymer were not appropriate as paint protection sheets in terms of the mark-free removability. With Examples 16, upon storage at 70 °C for 48 hours, the adhesive strength at a peeling speed of 30 m/min increased greatly, and with Example 17, upon at 23 °C for 48 hours, the adhesive strength at a peeling speed of 30 m/min turned out lower. As such, both examples lacked a balance of various properties expected for protection sheets.

Although specific embodiments of the present invention have been described in detail above, these are merely for illustrations and do not limit the scope of the claims. The art according to the claims includes various modification and changes made to the specific embodiments illustrated above.

INDUSTRIAL APPLICABILITY

The paint protection according to the present invention can be adhered to an article having a painted surface, as a preferable means to protect the painted surface from collisions with minute objects and contacts with chemicals. The article to be protected have been provided with a paint work using a paint of various compositions such as acrylic, polyester- based, alkyd- based, melamine- based, urethane- based, and acid- epoxy cross- linked paints as well as paints based on combinations thereof (e.g., acryl- melamine- based, alkyd- melamine- based paints), and the like, with the article (an automobile body, automotive components, a metal plate such as a steel plate, a molded article thereof, or the like) comprising a paint film formed by the paint work. In particular, it is suitable as a paint protection sheet for automobiles (e.g., for paint finishes of automobile bodies) that are possibly sloped outside for a long time or transported to regions of tropical climate or various other climates, and also are exposed to high expectations for the appearance of the paint finishes.

**Claims**

1.  A paint protection sheet comprising a support substrate and a layer of a pressure-sensitive adhesive provided thereon, wherein the pressure-sensitive adhesive comprises:

    a polyisobutylene as a base polymer; and
    a styrene/isobutylene block copolymer, and
    the amount of the styrene/isobutylene block copolymer in the pressure-sensitive adhesive is larger than zero part by mass, but smaller than or equal to 70 parts by mass relative to 100 parts by mass of the polyisobutylene.

2.  The paint protection sheet according to Claim 1, wherein the styrene/isobutylene block copolymer primarily comprises a triblock copolymer having a structure of styrene block-isobutylene block-styrene block.

3.  The paint protection sheet according to Claim 1 or 2, wherein the pressure-sensitive adhesive exhibits a room temperature storage modulus A when measured at a frequency of 10 Hz and a temperature of 23 °C, and a high temperature storage modulus B when measured at a frequency of 10 × Hz and a temperature of 23 °C, with the storage moduli A and B satisfying the next inequality:

$$A/B < 1.3.$$

4.  The paint protection sheet according to any one of Claims I to 3, wherein the pressure-sensitive adhesive exhibits a room temperature storage modulus A of $4.5 \times 10^5$ Pa or lower when measured at a frequency of 10 Nz and a temperature of 23 °C.

5.  The paint protection sheet according to any one of Claims I to 4, wherein the polyisobutylene has a weight average molecular weight in a range from $30 \times 10^4$ to $150 \times 10^4$.

6.  The paint protection sheet according to any one of Claims I to 5, wherein the styrene/isobutylene block copolymer has a weight average molecular weight in a range from $3 \times 10^4$ to $20 \times 10^4$.

[Fig. 1]

[Fig. 2]

(a)

24

24A

22A

90mm

30

4.5mm

22

(b)

24A

22A

90mm

24

30

4.5mm

22

4mm

(c)

24A

30

22A

90mm

24

Initially-adhered length 80mm

4.5mm

22

(d)

24A

30

22A

90mm

80mm

24

4.5mm

22

Peeled segment of test piece

Europäisches
Patentamt

European
Patent Office

Office européen
des brevets

# EUROPEAN SEARCH REPORT

**Application Number**

EP 13 15 9925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 200752<br>Thomson Scientific, London, GB;<br>AN 2007-534265<br>XP002698355,<br>& WO 2007/063812 A1 (KANEKA CORP)<br>7 June 2007 (2007-06-07)<br>* abstract * | 1-6 | INV.<br>C09J123/02<br>C09J123/22 |
| X | DATABASE WPI<br>Week 200853<br>Thomson Scientific, London, GB;<br>AN 2008-J27345<br>XP002698354,<br>& WO 2008/087720 A1 (NICHIBAN KK)<br>24 July 2008 (2008-07-24)<br>* abstract * | 1-6 | |
| X | US 2009/149567 A1 (LAM PETER KWOK HING [DK] ET AL) 11 June 2009 (2009-06-11)<br>* paragraphs [0002], [0085] - [0094];<br>examples 1-4 * | 1,3,4,6 | TECHNICAL FIELDS SEARCHED (IPC)<br><br>C09J |

The present search report has been drawn up for all claims

| Place of search | Date of completion of the search | Examiner |
|---|---|---|
| Munich | 6 June 2013 | Frison, Céline |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 13 15 9925

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2013

| Patent document cited in search report | | Publication date | Patent family member(s) | | Publication date |
|---|---|---|---|---|---|
| WO 2007063812 | A1 | 07-06-2007 | NONE | | |
| WO 2008087720 | A1 | 24-07-2008 | JP | 5102226 B2 | 19-12-2012 |
| | | | WO | 2008087720 A1 | 24-07-2008 |
| US 2009149567 | A1 | 11-06-2009 | AT | 552317 T | 15-04-2012 |
| | | | EP | 1697480 A1 | 06-09-2006 |
| | | | US | 2009149567 A1 | 11-06-2009 |
| | | | WO | 2005059054 A1 | 30-06-2005 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012062204 A
- JP 2832565 B
- JP 2007238746 A
- JP 3887402 B
- JP 3471122 B
- JP 3878700 B
- JP H93420 A

**Non-patent literature cited in the description**

- **HIDEKI YAMAMOTO.** SP value fundamentals, application, and calculation method. Johokiko Co., Ltd, 03 April 2006, 66-67